# EUROPEAN PATENT APPLICATION

(11) **EP 1 168 741 A2**
(43) Date of publication of application: **02.01.2002**
(21) Application number: 01114912.7
(22) Date of filing: 19.06.2001
(51) Int. Cl.: H04L 25/06

(54) **Determination of a discrimination threshold in an optical transmission system**

(30) Priority: 26.06.2000 JP 2000190388
(71) Applicant: KDD Submarine Cable Systems Inc., Tokyo (JP)
(72) Inventor: Yamaguchi, Takuyuki, Kanagawa-Ken (JP); Taga, Hidenori, 3-chome, Shinjuku-ku, Tokyo (JP); Goto, Koji, 3-chome, Shinjuku-ku, Tokyo (JP)
(74) Representative: Schaumburg, Thoenes & Thurn

(57) **Abstract**

A method to determine a discrimination threshold of a received signal input from an optical transmission line comprises steps of measuring a bit error rate of the received signal at each of a plurality of discrimination thresholds by changing a polarization direction of an optical signal to enter the optical transmission line to detect the worst bit error rate at each discrimination threshold, and searching a predetermined bit error rate from the plurality of the detected worst bit error rates and searching a discrimination threshold of the received signal according to the predetermined bit error rate.

## Description

### FIELD OF THE INVENTION

This invention relates to a method and apparatus to determine a discrimination threshold of a received signal and an optical transmission system, and more specifically, to a method and an apparatus to determine a stable discrimination threshold of a received signal from an optical transmission line, and an optical transmission system.

### BACKGROUND OF THE INVENTION

In a conventional optical transmission system, a discrimination threshold of a received optical signal on a reception terminal is determined according to a measured result obtained by measuring transmission characteristics of an optical transmission line at its installation time. Then after that, a signal value of a received optical signal is discriminated based on the fixed threshold.

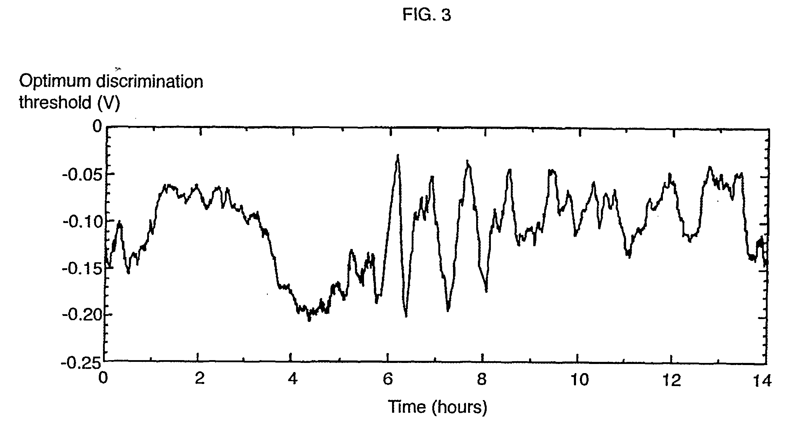

As stated above, in a conventional system, a discrimination threshold of a received optical signal is fixed. However, transmission characteristics of an optical fiber transmission line are varied with time due to factors such as polarization mode dispersion (PMD), polarization dependent loss (PDL), and polarization dependent gain (PDG), and the variation is more prominent in a long haul optical transmission line. It has made clear that an optimum discrimination threshold of a received optical signal varies according to a variation of transmission characteristics. FIG. 3 shows a measured example of a time variation of an optimum discrimination threshold. The vertical axis expresses optimum discrimination threshold, and the horizontal axis expresses elapsed time.

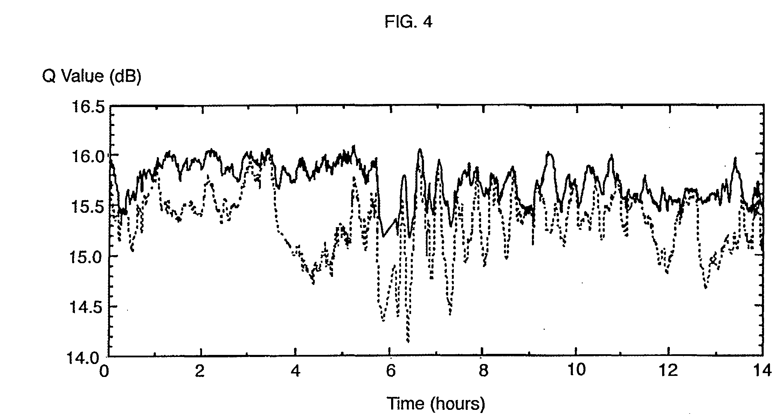

When an optimum discrimination threshold is set according to a variation of transmission characteristics, a higher Q value is obtained compared to a case of a fixed discrimination value. FIG. 4 shows measured examples of Q values in two cases that a discrimination threshold is set to the optimum and a discrimination threshold is fixed. The vertical axis expresses Q value, and the horizontal axis expresses elapsed time. The solid line expresses the measured value of optimum discrimination threshold, and the broken line expresses the one of the fixed discrimination threshold.

To set an optimum discrimination threshold according to a variation of transmission characteristics, it is necessary to adaptively control a discrimination threshold according to a measured result of the transmission characteristics (for example, see Japanese Patent Application Open disclosure gazette 2000-341344 filed by the same applicant which corresponds to US patent application No. 09/546,917). However, if it is possible to find a discrimination threshold which is most stable with time, the above adaptive control becomes unnecessary.

### SUMMARY OF THE INVENTION

It is therefore an object of the present invention to provide a method and an apparatus to determine a time-stable discrimination value of a received optical signal, and an optical transmission system.

Another object of the present invention is to provide a method and an apparatus to determine a time-stable discrimination value of a received optical signal in an instance, and an optical transmission system.

A method to determine a discrimination threshold of a received signal according to the invention is a method to determine a discrimination threshold of a received signal input from a optical transmission line, composed of a step to measure a bit error rate of the received signal at each of a plurality of discrimination thresholds by changing a polarization direction of an optical signal to enter the optical transmission line to detect the worst bit error rate at each discrimination threshold, and a step to search a predetermined bit error rate from the plurality of the detected worst bit error rates and to search a discrimination threshold of the received signal according to the predetermined bit error rate.

By following the above procedure, a discrimination threshold of a received signal is determined assuming a condition in which a bit error rate becomes the worst by forcedly changing a polarization state of the optical signal, and thus the determined discrimination values becomes stable with time. Since it is simply to change a polarization direction while the discrimination threshold is changed, it is possible to obtain the result in a short time.

Preferably, the predetermined bit error rate should be the lowest presumed from the plurality of the detected bit error rates. Clearly, any bit error rate is acceptable as far as it is smaller than a certain value which satisfies its transmission specification.

The method to determine a discrimination threshold of a received signal according to the invention is also a method to determine a discrimination threshold of a received signal input from an optical transmission line, composed of a first searching step to measure a bit error rate of the received signal at an initial discrimination threshold by changing a polarization direction of an optical signal which enters the optical transmission line and to search a polarization state of the optical signal which makes bit error rate the worst, and a second searching step to scan the discrimination threshold of the received signal keeping the polarization state of the optical signal obtained in the first searching step to search a discrimination threshold of the received signal which becomes a predetermined bit error rate.

In the above procedure, the discrimination threshold of the received signal is determined presuming a condition in which the bit error rate becomes the worst by forcedly changing a polarization state of the optical signal, and thus the determined discrimination threshold becomes stable with time. Since the procedure is just to scan the discrimination threshold after determining the polarization direction to make the bit error rate the worst, it is possible to obtain the result in a short time.

Preferably, the predetermined bit error rate should be the lowest. However, it is clear that any bit error rate is acceptable as far as it is smaller than a certain value which satisfies its transmission specification.

An apparatus to determine a discrimination threshold of a received signal according to the invention is an apparatus to determine a discrimination value of a received signal input from an optical transmission line, composed of a polarization controller disposed between an optical transmitter to output an optical signal and the optical transmission line to rotate a polarization of the optical signal output from the optical transmitter, a photodetector to convert the optical signal propagated on the optical transmission line into an electric signal, a discrimination circuit to discriminate output from the photodetector according to a discrimination threshold, an error rate measuring circuit to measure a bit error rate of output from the discrimination circuit, and a control circuit which controls the polarization rotating amount of the polarization controller and the discrimination threshold of the discrimination circuit to search the worst bit error rate at each discrimination threshold by changing the polarization rotating amount of the polarization controller at each of a plurality of discrimination thresholds and to search a discrimination threshold having a predetermined bit error rate out of the plurality of the worst bit error rates.

In the above configuration, the discrimination threshold of the received signal is determined assuming a condition in which the bit error rate becomes the worst by forcedly changing the polarization state of the optical signal, and thus the determined discrimination threshold is stable with time. Also, since the procedure is only to change the polarization direction as the discrimination threshold is changed, it is possible to obtain a result in a short time.

Preferably, the predetermined bit error rate should be the lowest one assumed from the plurality of the detected worst bit error rates. However, it is clear that any bit error rate is acceptable as far as it is smaller than a certain value which satisfies its transmission specification.

The apparatus to determine a discrimination threshold of a received signal according to the invention is an apparatus to determine a discrimination threshold of a received signal input from an optical transmission line, composed of a polarization controller disposed between an optical transmitter to output an optical signal and the optical transmission line and to rotate a polarization of the optical signal output from the optical transmitter, a photodetector to convert the optical signal propagated on the optical transmission line into an electric signal, a discrimination circuit to discriminate output from the photodetector according to a discrimination threshold, an error rate measuring circuit to measure a bit error rate of output from the discrimination circuit, and a control circuit which controls the polarization rotating amount of the polarization controller and the discrimination threshold of the discrimination circuit to search a polarization rotating amount which makes a bit error rate the worst by changing the polarization rotating amount of the polarization controller at an initial discrimination threshold, scans the discrimination threshold of the discrimination circuit maintaining the polarization rotating amount, and to search a discrimination threshold having a predetermined bit error rate.

In the above configuration, the discrimination threshold of the received signal is determined presuming a condition in which the bit error rate becomes the worst by forcedly changing the polarization state of the optical signal, and thus the determined discrimination threshold is stable with time. The procedure is just to scan the discrimination threshold after determining the polarization direction to make the bit error rate the worst, and thus it is possible to obtain the result in a short time.

Preferably, the predetermined bit error rate should be the lowest. However, it is clear that any bit error rate is acceptable as far as it is smaller than a certain value which satisfies its transmission specification.

An optical transmission system according to the invention is composed of an optical transmission line, an optical transmitter to output an optical signal, a polarization controller disposed between the optical transmitter and the optical transmission line to rotate a polarization of the optical signal output from the optical transmitter, a photodetector to convert the optical signal propagated on the optical transmission line into an electric signal, a discrimination circuit to discriminate output from the photodetector according to a discrimination threshold, an error rate measuring circuit to measure a bit error rate of output from the discrimination circuit , and a control circuit which controls the polarization rotating amount of the polarization controller and the discrimination threshold of the discrimination circuit to search a discrimination threshold corresponding to a predetermined bit error rate within the worst bit error rates obtained from changing a polarization direction of the optical signal.

In the above configuration, the discrimination threshold of the received signal is determined presuming a condition in which the bit error rate becomes the worst by forcedly changing a polarization state of an optical signal, and thus the determined discrimination threshold is stable with time.

Preferably, the predetermined bit error rate should be the lowest one within the worst bit error rates relative to the variation of the polarization direction of the optical signal. However, it is clear that any bit error rate is acceptable as far as it is smaller than a certain value which satisfies its transmission specification.

Preferably, the control circuit searches the worst bit error rate at each discrimination threshold by changing a polarization rotating amount of the polarization controller at each of a plurality of discrimination thresholds and also searches a discrimination threshold having the lowest bit error rate from the plurality of the worst bit error rate. Alternatively, the control circuit searches a polarization rotating amount to have the worst bit error rate by changing the polarization rotating amount of the polarization controller at an initial discrimination threshold, scans the discrimination threshold of the discrimination circuit maintaining the polarization rotating amount, and searches a discrimination threshold to make the bit error rate of the received signal lowest.

### BRIEF DESCRIPTION OF THE DRAWING

The above and other objects, features and advantages of the present invention will be apparent from the following detailed description of the preferred embodiments of the invention in conjunction with the accompanying drawings, in which:
FIG. 1 shows a schematic block diagram of a first embodiment according to the invention;
FIG. 2 is a graph showing a relation between a discrimination threshold of a received signal and a bit error rate;
FIG. 3 shows a time variation of the optimum discrimination threshold; and
FIG. 4 shows measured results of Q value in conditions of fixed and optimized discrimination thresholds.

### DESCRIPTION OF THE PREFERRED EMBODIMENT

Embodiments of the invention are explained below in detail with reference to the drawings.

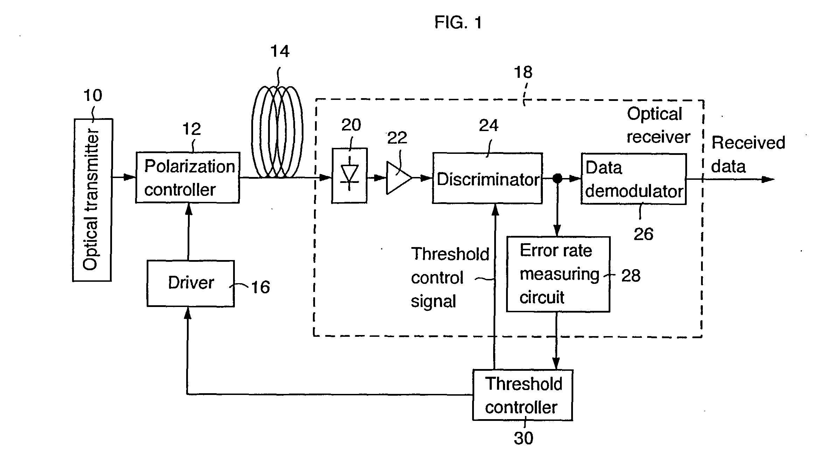

FIG. 1 shows a schematic block diagram of a first embodiment according to the invention. An optical transmission terminal 10 outputs an optical signal having a single wavelength or a wavelength multiplexed optical signals. Here, to make it clearly understandable, the optical transmission terminal 10 is assumed to output an optical signal having a single wavelength. The optical signal output from the optical transmission terminal 10 enters an optical transmission line 14 through a polarization controller 12. The polarization controller 12 is an element to rotate polarization of an input light at an angle according to a voltage level applied by a driving circuit 16. It is applicable whether or not the optical fiber transmission line 14 is a type having an optical amplifier repeater on it. The optical signal propagated on the optical fiber transmission line 14 enters an optical reception terminal 18.

In the reception terminal 18, a photodetector 20 converts the optical signal from the optical fiber 14 into an electric signal. An amplifier 22 amplifies the output from the photodetector 20 to a predetermined level. A discrimination circuit 24 discriminates the output from the amplifier 22 at a threshold controlled by a threshold control signal and outputs a discriminated binary signal. A data demodulation circuit 26 demodulates a data from the binary signal output from the discrimination circuit 24 and outputs it to the outside as a received data. An error rate measuring circuit 28 measures a bit error rate (BER) of the output from the discrimination circuit 24 and applies a measured result to a threshold control circuit 30. In FIG. 1, although the threshold control circuit 30 is disposed on the side of the reception terminal 18, it is also possible to be disposed on the side of the optical transmission terminal 10.

Although the details will be explained later, the threshold control circuit 30 changes a polarization rotating amount of the polarization controller 12 at each of discrimination thresholds one by one within a range at least between 0° and 180° or a range between -90° and 90° using driving circuit 16 while it scans a discrimination threshold of the discrimination circuit 24, determines a discrimination threshold which is most stable regardless of a polarization state by considering the bit error rate at each polarization rotating amount of each discrimination threshold, and controls the discrimination threshold of the discrimination circuit 24 to keep the most stable discrimination threshold.

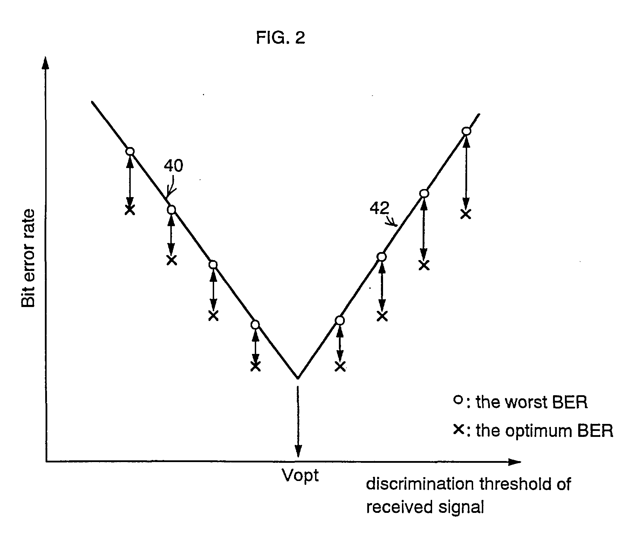

FIG. 2 shows a schematic diagram showing a relation between a discrimination threshold of the discrimination circuit 24 and a bit error rate (BER). With reference to FIG. 2, a method or a procedure according to this embodiment to detect the most stable discrimination threshold is explained below.

The threshold control circuit 30 sets an initial discrimination threshold for the discrimination circuit 24. The initial discrimination threshold is determined, for example, from transmission characteristics measured when the optical fiber transmission line 14 is installed. Under the discrimination threshold, the threshold control circuit 30 rotates a polarization of the optical signal little by little by controlling the polarization controller 12 using driving circuit 16 and searches a polarization state to make the bit error rate the worst out of the output from the error rate measuring circuit 28. As the polarization makes one rotation, the bit error rate varies in a constant range. In FIG. 2, the worst BER is expressed as a circle, and the optimum BER is expressed as a cross. Generally, the optimum BER is widely noticed, but in this embodiment, the worst BER is the one to be noticed. In the worst BER, the transmission characteristics are most stable because the BER never becomes any worse even if a polarization state varies.

This procedure is repeated at each discrimination threshold, and thus the worst BER at each discrimination threshold is detected. As a result, as shown in FIG. 2, solid lines 40 and 42 are obtained to connect the worst BER at each discrimination threshold. At a discrimination threshold Vopt corresponding to an intersection point 44 of the two solid lines 40 and 42, the bit error rate becomes the highest within a range in which the transmission characteristics are most stable. That is, the Vopt shown in FIG. 2 becomes the most stable discrimination threshold with time. After this measurement, the threshold control circuit 30 controls the discrimination threshold of the discrimination circuit 24 to be the value Vopt.

Another procedure to determine an optimum discrimination threshold which makes transmission characteristics stable with time is explained below. In a condition that a discrimination threshold of the discrimination circuit 24 is set to a certain value, a polarization state to obtain the worst bit error rate is searched by changing a polarization rotating amount of the polarization controller 12 little by little using the driving circuit 16. Keeping the same polarization state, a discrimination threshold to maximize the bit error rate is searched by changing the discrimination threshold of the discrimination circuit 24. Generally, the worst polarization state at a certain discrimination threshold is also the worst transmission state at another discrimination threshold. Therefore, in a condition that a polarization state in the optical fiber transmission line 14 is stable, when a discrimination threshold which has the worst polarization state is changed to another, the bit error rate varies along the solid line 40 or 42 in FIG. 2 and then the discrimination threshold Vopt at which the bit error rate is the worst becomes the optimum discrimination threshold. Accordingly, the discrimination threshold Vopt at which the bit error rate is lowest is an optimum one. In such way, transmission state, especially for a change of a polarization state, is detected.

When the threshold control circuit 30 is disposed on the side of the optical reception terminal 18, it should only provide a line to transmit the control signal to the driving circuit 16. It is possible to utilize a line of a public phone, a transmission line installed in parallel with the optical fiber transmission line 14, or a transmission line between the terminals. When the threshold control circuit 30 is disposed on the side of the optical reception terminal 18, a measured result of the error rate measuring circuit 28 is transmitted through the same line from the optical reception terminal side to the optical transmission terminal side, and the threshold control signal is transmitted from the optical transmission terminal side to the optical reception terminal side.

By performing the above procedure intermittently, the discrimination threshold of the received signal is controlled to be an optimum value.

In addition, in the above description, the embodiments of the method and the apparatus to determine the optimum discrimination threshold are described. Namely, a discrimination threshold having the best BER within the worst BERs is searched. However, when a discrimination threshold having a BER smaller than a certain value within a range assumed from the worst BERs is finally selected, it is still possible to obtain reception characteristics of sufficient stability.

As readily understandable from the aforementioned explanation, according to the invention, a discrimination threshold which is stable for any transmission state can be simply and quickly determined.

While the invention has been described with reference to the specific embodiment, it will be apparent to those skilled in the art that various changes and modifications can be made to the specific embodiment without departing from the spirit and scope of the invention as defined in the claims.

## Claims

1. A method to determine a discrimination threshold of a received signal input from an optical transmission line, comprising steps of:
measuring a bit error rate of the received signal at each of a plurality of discrimination thresholds by changing a polarization direction of an optical signal to enter the optical transmission line to detect the worst bit error rate at each discrimination threshold; and
searching a predetermined bit error rate from the plurality of the detected worst bit error rates and searching a discrimination threshold of the received signal according to the predetermined bit error rate.

2. The method of claim 1 wherein the predetermined bit error rate comprises the lowest bit error rate assumed from the plurality of the detected worst bit error rates.

3. A method to determine a discrimination threshold of a received signal input from an optical transmission line, comprising:
a first searching step to measure a bit error rate of the received signal at an initial discrimination threshold by changing a polarization direction of an optical signal which enters the optical transmission line and to search a polarization state of the optical signal which makes the bit error rate the worst; and
a second searching step to scan the discrimination threshold of the received signal keeping the polarization state of the optical signal after the first searching step to search a discrimination threshold of the received signal which becomes a predetermined bit error rate.

4. The method of claim 3 wherein the predetermined bit error rate comprises the lowest bit error rate.

5. An apparatus to determine a discrimination threshold of a received signal from an optical transmission line, comprising:
a polarization controller disposed between an optical transmitter for outputting an optical signal and the optical transmission line to rotate polarization of the optical signal output from the optical transmitter;
a photodetector to convert the optical signal propagated on the optical transmission line into an electric signal;
a discrimination circuit to discriminate the output from the photodetector according to a discrimination threshold;
an error rate measuring circuit to measure a bit error rate of the output from the discrimination circuit; and
a control circuit which controls the polarization rotating amount of the polarization controller and the discrimination threshold of the discrimination circuit to search the worst bit error rate at each discrimination threshold by changing the polarization rotating amount of the polarization controller at each of a plurality of discrimination thresholds and to search a discrimination threshold having a predetermined bit error rate out of the worst bit error rates.

6. The apparatus of claim 5 wherein the control circuit sets the discrimination circuit for a finally obtained discrimination threshold.

7. The apparatus of claim 5 or 6 wherein the predetermined bit error rate comprises the lowest bit error rate assumed from the plurality of the worst bit error rates.

8. An apparatus to determine a discrimination threshold of a received signal input from an optical transmission line comprising:
a polarization controller disposed between an optical transmitter for outputting an optical signal and the optical transmission line to rotate polarization of the optical signal output from the optical transmitter;
a photodetector to convert the optical signal propagated on the optical transmission line into an electric signal;
a discrimination circuit to discriminate the output from the photodetector according to a discrimination threshold;
an error rate measuring circuit to measure a bit error rate of the output from the discrimination circuit; and
a control circuit which controls the polarization rotating amount of the polarization controller and the discrimination threshold of the discrimination circuit to search a polarization rotating amount having the worst bit error rate by changing the polarization rotating amount of the polarization controller at an initial discrimination threshold, and to scan the discrimination threshold of the discrimination circuit keeping the polarization rotating amount to search a discrimination threshold having a predetermined bit error rate.

9. The apparatus of claim 8 wherein the control circuit sets the discrimination circuit for the finally obtained discrimination threshold.

10. The apparatus of claim 8 or 9 wherein the predetermined bit error rate comprises the lowest bit error rate.

11. An optical transmission system comprising:
an optical transmission line;
an optical transmitter to output an optical signal;
a polarization controller disposed between the optical transmitter and the optical transmission line to rotate polarization of the optical signal output from the optical transmitter;
a photodetector to convert the optical signal propagated on the optical transmission line into an electric signal;
a discrimination circuit to discriminate the output from the photodetector according to a discrimination threshold;
an error rate measuring circuit to measure a bit error rate of the output from the discrimination circuit; and
a control circuit which controls the polarization rotating amount of the polarization controller and the discrimination threshold of the discrimination circuit to search a discrimination threshold corresponding to a predetermined bit error rate out of the worst bit error rates relative to the variation of the polarization direction of the optical signal.

12. The optical transmission system of claim 11 wherein the predetermined bit error rate comprises the lowest bit error rate within the worst bit error rates relative to the variation of the polarization direction of the optical signal.

13. The optical transmission system of claim 11 or 12 wherein the control circuit searches the worst bit error rate at each discrimination threshold by changing the polarization rotating amount of the polarization controller at each of a plurality of discrimination thresholds and searches a discrimination threshold to make the bit error rate the lowest out of the plurality of the worst bit error rates.

14. The optical transmission system of claim 11 to 13 wherein the control circuit searches a polarization rotating amount having the worst bit error rate by changing the polarization rotating amount of the polarization controller at an initial discrimination threshold, and scans the discrimination thresholds of the discrimination circuit keeping the polarization rotating amount to search a discrimination threshold making the bit error rate of the optical signal the worst.

15. The optical transmission system of claim 11 to 14 wherein the control circuit sets the discrimination circuit for the predetermined discrimination threshold.
